# EUROPÄISCHE PATENTSCHRIFT

(11) **EP 0 683 325 B1**
(45) Veröffentlichungstag und Bekanntmachung des Hinweises auf die Patenterteilung: **23.07.1997**
(21) Anmeldenummer: 95103022.0
(22) Anmeldetag: 03.03.1995
(51) Int. Cl.: F16B 15/04

(54) **Befestigungselement mit Spreizelement**
Fixing device having a spreading element
Dispositif de fixation ayant un élément d'écartement

(30) Priorität: 21.04.1994 DE 4413902; 01.06.1994 DE 4419148; 23.09.1994 DE 4433918
(43) Veröffentlichungstag der Anmeldung: 22.11.1995
(73) Patentinhaber: fischerwerke Artur Fischer GmbH & Co. KG, D-72178 Waldachtal (DE)
(72) Erfinder: Fischer, Artur, Prof. Dr. h.c. Dr.-Ing. E.h., D-72178 Waldachtal (DE)

(56) Entgegenhaltungen:
- FR-A- 2 251 740
- US-A- 2 362 969

## Beschreibung

Die Erfindung betrifft ein Befestigungselement mit am hinteren Ende angeordnetem Haltemittel zur Verspannung eines Gegenstandes gemäß dem Oberbegriff des Anspruches 1.

Aus der DE 33 45 331 A1 ist Befestigungselement bekannt, das im Bereich seiner vorderen Stirnseite einen Spreizbereich hat, der von zwei im Abstand verlaufenden, nach außen gewölbten Schenkeln gebildet wird. Die Verankerung eines solchen Befestigungselements erfolgt in der Weise, daß dessen Schaft in ein vorgebohrtes Bohrloch eines Bauteils eingeschlagen wird. Beim Eintreiben des Schaftes in das Bohrloch werden die Spreizschenkel von der Bohrlochwandung nach innen zusammengepreßt, wobei durch ein in dem Freiraum zwischen den Spreizschenkeln eingesetztes Spreizelement ein erhöhter Druck von den Spreizschenkeln gegen die Bohrlochwandung erzeugt wird. Nach dem Eintreiben werden die Spreizschenkel des Befestigungselements durch die plastische und/oder elastische Rückstellkraft des Spreizelements gegen die Bohrlochwandung gepreßt, wodurch eine entsprechend hohe Haltekraft erreicht wird. Allerdings ist aufgrund der vollflächig wirkenden Einlage der Eintreibwiderstand des bekannten Befestigungselementes sehr hoch. Des weiteren ist der bekannte Nagel nicht für eine Verwendung in der Zugzone geeignet, bei der durch Rißbildung eine Bohrlocherweiterung eintreten kann. Die Einlage ist nämlich nicht in der Lage, durch Nachspreizen die Bohrlocherweiterung auszugleichen.

Der Erfindung liegt daher die Aufgabe zugrunde, ein Befestigungselement mit einem Spreizbereich zu schaffen, das einerseits in einfacher Weise lediglich durch Eintreiben in ein Bauteil verankerbar ist, und das andererseits durch Nachspreizen hohe Haltewerte auch dann aufweist, wenn durch Rißbildung eine Bohrlocherweiterung eintritt.

Die Lösung dieser Aufgabe wird durch die im Anspruch 1 angegebenen Merkmale erreicht. Durch einen in eine Längskerbe des Schaftes des Befestigungselementes eingesetzten Keil wird erreicht, daß dieser sich im Bohrloch mit der Bohrlochwandung verspannt. Tritt nun eine Bohrlocherweiterung infolge einer Rißbildung im Bauteil auf, so wird durch die am Befestigungselement angreifende Zuglast eine Verschiebung zwischen dem im Bohrloch ortsfest verspannten Keil und dem Schaft des Befestigungselementes bewirkt. Durch die ansteigende Grundfläche der Längskerbe tritt bei dieser Verschiebung eine zunehmende Verspannung ein, die das Befestigungselement trotz der Bohrlocherweiterung wieder im Bauteil fest verankert. Durch diesen Nachspreizeffekt wird somit ein durch Eintreiben in ein Bohrloch verankerbares Befestigungselement geschaffen, das auch für die Zugzone geeignet ist.

Zur Verringerung des Eintreibwiderstandes ist es zweckmäßig, daß die mit Zähnen versehene Außenfläche des Keils vom vorderen Stirnende des Befestigungselementes ausgehend zum hinteren Ende leicht ansteigend verläuft.

Damit der Keil beim Einschlagen des Befestigungselementes ortsfest abgestützt wird, ist ein Anschlag an der zum hinteren Ende des Befestigungselementes weisenden Begrenzung der Längskerbe in Form eines annähernd rechtwinkligen Auslaufs vorgesehen, an dem der Keil an seiner tiefsten Position anliegt.

Weiterhin kann ein Halteelement, vorzugsweise ein Gummiring, den Keil verschiebbar in der Längskerbe vor dem Einschlagen des Befestigungselementes in das Bohrloch festhalten, damit der Keil nicht unbeabsichtigt aus der Längskerbe herausfällt.

Eine gute Sperrwirkung der Zähne bei geringem Einschlagwiderstand wird dadurch erreicht, daß die Zähne unterschiedliche Zahnflanken aufweisen, wobei die kürzere Zahnflanke in Richtung zum vorderen Stirnende angeordnet ist.

Um die leichte Verschiebbarkeit des Keils auch bei Extrembedingungen sicherzustellen, ist es zweckmäßig, zwischen der Auflagefläche des Keils und der Grundfläche der Längskerbe eine Gleitschicht anzubringen. Diese Gleitschicht kann durch Kunststoff oder einer entsprechenden Oberflächenbehandlung der Grundfläche der Längskerbe bzw. der Auflagefläche des Keils gebildet sein.

Ebenfalls für extreme Bedingungen ist es vorteilhaft, zwischen der Grundfläche der Längskerbe und dem Keil eine den Keil radial nach außen drückende Blattfeder einzulegen. Bei einer starken Bohrlocherweiterung im Verhältnis zum Bohrlochdurchmesser wird über die Blattfeder der Keil gegen die Bohrlochwandung gepreßt, so daß dieser aufgrund der erhöhten Friktion gehalten und eine Verschiebung zwischen Keil und Schaft des Befestigungselementes stattfinden kann.

Schließlich kann das Befestigungselement an seinem vorderen Stirnende mit einer Nagelspitze versehen sein. Damit ist das Befestigungselement in weichen und porösen Baustoffen wie beispielsweise Gasbeton ohne Vorbohrung eintreibbar und in diesen Baustoffen mit hohen Haltekräften verankerbar.

Das mit einem Nagelkopf ausgestattete Befestigungselement ist auch für eine Verankerung in harten Baustoffen geeignet. In solchen Baustoffen ist eine Vorbohrung für das Befestigungselement erforderlich. In Abhängigkeit vom Verankerungsgrund und dem Bohrwerkzeug können sich unterschiedliche Bohrlochdurchmesser ergeben. Beim Einschlagen des Befestigungselementes erfolgt zwar dennoch eine Verankerung aufgrund der Selbsthemmung des Keils, allerdings ist es zweckmäßig, zur Vermeidung eines Schlupfs durch unterschiedliche Bohrlochtoleranzen den zu befestigenden Gegenstand zusätzlich mit einem Verspannelement an der Mauerwerksoberfläche zu verspannen. Zu diesem Zweck wird vorgeschlagen, unter den Nagelkopf ein Verspannelement anzuordnen, das entweder als Tellerfeder oder als keilförmige Unterlagscheibe ausgebildet ist. Bei Verwendung einer Tellerfeder übt diese auf den Nagelkopf eine Zugspannung aus, die eine geringe axiale Verschiebung zwischen dem Keil und dem Befestigungselement bewirkt. Durch diese Verschiebung tritt eine Verkeilung des Befestigungselementes im Bohrloch ein, die einen Anfangsschlupf vermeidet.

Der gleiche Effekt wird mit einer keilförmigen Unterlagscheibe erreicht, die zwischen der einen Gegenkeil bildenden Unterseite des Nagelkopfs und der Oberseite des zu befestigenden Gegenstandes eingetrieben wird.

In einer weiteren vorteilhaften Ausgestaltung kann die Außenfläche des Keils mit einer längslaufenden, beidseitig von Außenrändern begrenzten Mulde versehen sein, wobei der Muldengrund vorzugsweise innerhalb des Durchmessers des Schaftes liegt und nur die mit Zähnen versehenen Außenränder den Schaft überragen.

Mit dieser Gestaltung wird eine weitere Reduzierung des Eintreibwiderstandes erreicht, ohne daß dadurch die Haltekraft vermindert wird. Die Mulde dient beim Eintreiben des Befestigungselementes zur Aufnahme des von der Bohrlochwandung abgeschabten Materials. Durch die Verringerung der Preßfläche des Spreizelementes aufgrund der Mulde dringen die Außenränder bei einer Verschiebung zwischen dem Spreizelement und dem Schaft des Befestigungselementes tiefer in die Bohrlochwandung ein. Dabei kommen dann auch die gewölbten Flächen der Mulde zum Eingriff, die dann aufgrund der größeren Oberfläche gegenüber einem planen Keilelement einen höheren Reibwiderstand zwischen dem Spreizelement und der Bohrlochwandung bewirken.

In der Zeichnung sind Ausführungsbeispiele der Erfindung dargestellt.

Es zeigen:
- Figur 1: das Befestigungselement mit in einer Längskerbe seines Spreizbereichs einliegendem Keil,
- Figur 2: einen Längsschnitt des Befestigungselementes von Figur 1,
- Figur 3: die Ausbildung des Befestigungselementes als Nagel mit einem Nagelkopf und einer Nagelspitze,
- Figur 4: einen Längsschnitt des Befestigungselementes mit einer in der Längskerbe eingelegten Blattfeder,
- Figur 5: das im Bohrloch verankerte Befestigungselement mit einer unter dem Nagelkopf angeordneten Tellerfeder als Verspannelement,
- Figur 6: das Befestigungselement mit einer keilförmigen Unterlagscheibe als Verspannelement,
- Figur 7: eine Variante des Befestigungselementes in Seitenansicht mit einem eine Mulde aufweisenden Spreizelement und
- Figur 8: einen Querschnitt des Befestigungselementes nach Figur 7 gemäß der Schnittlinie A-A.

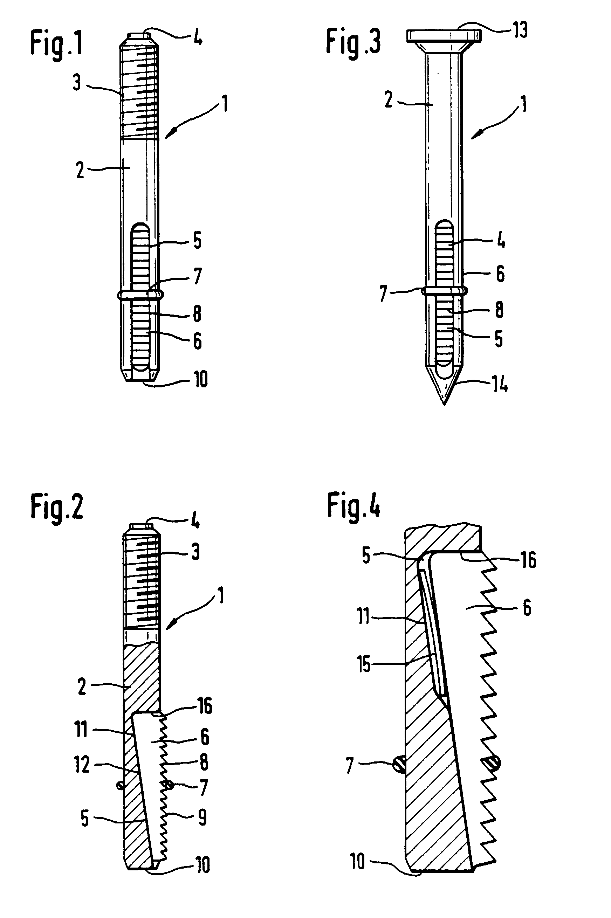

Das in Figur 1 dargestellte Befestigungselement 1 hat einen Schaft 2 mit einem Außengewinde 3 am hinteren Ende 4 und einen Spreizbereich, der durch eine Längskerbe 5 mit U-förmigem Querschnitt und einem in dieser Längskerbe einliegenden Keil 6 gebildet ist. Der in der Längskerbe 5 leicht verschiebbare Keil 6 wird durch ein Halteelement 7 - im Ausführungsbeispiel ein Gummiring - gehalten.

Der Keil 6 weist an seiner sichtbaren Oberkante sägezahnförmig ausgebildete Zähne 8 auf, deren Zahnflanke 9 (siehe Figur 2) zum vorderen Stirnende 10 des Befestigungselementes 1 abgeschrägt ist. Die Oberkante überragt etwa um die Zahnhöhe den Schaft 2, wobei diese zur Verringerung des Eintreibwiderstandes von der vorderen Stirnseite 10 ausgehend zum hinteren Stirnende 4 leicht ansteigend verläuft. Zwischen dem Keil 6 und der Grundfläche 11 der Längskerbe 5 ist eine Gleitschicht 12 in Form einer Kunststoffeinlage angeordnet. Diese Gleitschicht sorgt auch bei extremen Bedingungen für eine Verschiebbarkeit zwischen dem Keil 6 und dem Schaft 2 des Befestigungselementes. Ein günstiges Gleitverhalten kann auch durch entsprechende Oberflächenbehandlung der Auflagefläche des Keils 6 bzw. der Grundfläche 11 der Längskerbe 5 erreicht werden.

Das in Figur 3 dargestellte Ausführungsbeispiel weist zur Verspannung eines Gegenstandes einen Nagelkopf 13 und zum Eintreiben in einen weichen und porösen Baustoff ohne Vorbohrung eine Nagelspitze 14 auf.

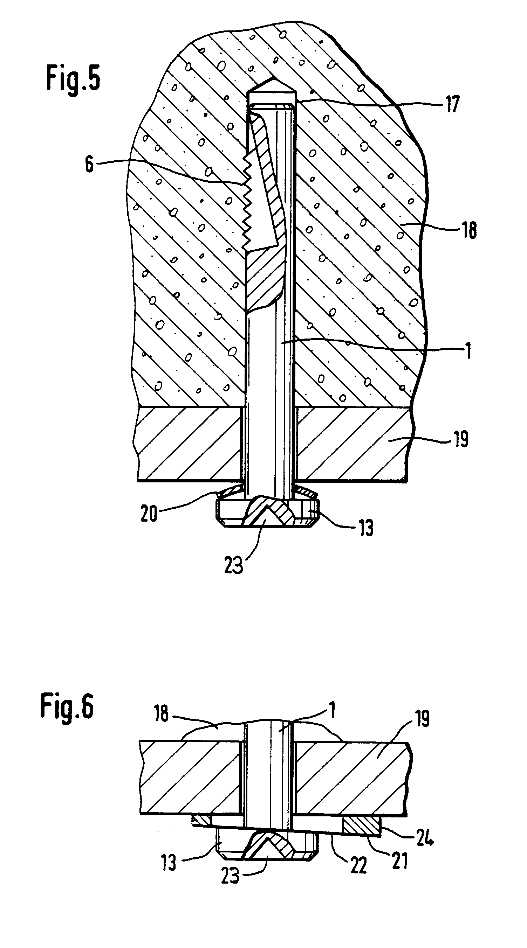

In der vergrößerten Darstellung eines Längsschnitts durch den Spreizbereich gemäß Figur 4 ist erkennbar, daß zwischen dem Keil 6 und der Grundfläche 11 der Längskerbe 5 eine Blattfeder 15 eingelegt ist. Der auf der Blattfeder 15 aufliegende Keil 6 wird von dieser gegen die Bohrlochwandung gepreßt, so daß insbesondere bei einer Bohrlocherweiterung durch Rißbildung die Friktion zwischen dem Keil 6 und der Bohrlochwandung erhalten bleibt.

In der Darstellung gemäß Figur 2 und 4 ist ersichtlich, daß die Grundfläche 11 der Längskerbe 5 zur vorderen Stirnseite hin ansteigt. Der in der Längskerbe 5 einliegende Keil 6 verjüngt sich entsprechend zum vorderen Stirnende 10, so daß er mit an seiner Oberkante ausgeprägten Zähnen 8 am Schaft 2 geringfügig zum hinteren Stirnende 4 ansteigend übersteht. An der zum hinteren Stirnende 4 weisenden Ende der Längskerbe 5 besitzt diese einen Anschlag 16, an dem sich der Keil 6 beim Einschlagen des Befestigungselementes 1 in seiner tiefsten Position abstützt.

Figur 5 zeigt das in einem Bohrloch 17 eines Bauteiles 18 verankerte Befestigungselement 1, das zur Befestigung des Gegenstandes 19 mit einem Nagelkopf 13 ausgebildet ist. Unter dem Nagelkopf 13 ist das als Tellerfeder 20 ausgebildete Verspannelement angeordnet. Beim Einschlagen des Befestigungselementes 1 wird die Tellerfeder 20 flachgedrückt und erzeugt eine elastische Verspannung zwischen dem Nagelkopf 13 und dem Befestigungsgegenstand 19. Durch diese Verspannung entsteht eine auf das Befestigungselement 1 wirkende Zugkraft, die das als Keil 6 ausgebildete Spreizelement mit dem Befestigungselement 1 im Bohrloch zusätzlich durch eine geringfügige axiale Verschiebung entsprechend der Zugspannung der Tellerfeder 20 im Bohrloch verkeilt.

Während im Ausführungsbeispiel nach Figur 5 durch die Tellerfeder 20 eine zwangsläufige Verspannung erfolgt, wird diese Verspannung im Ausführungsbeispiel nach Figur 6 durch Eintreiben einer keilförmigen Unterlagscheibe 21 unter den eine gegenläufige Keilfläche 22 aufweisenden Nagelkopf 13 erreicht. Durch die gegenläufig ansteigenden Keilflächen ergibt sich eine axiale Verschiebung zwischen dem Befestigungselement 1 und dem Spreizelement 6, die über die ansteigende Grundfläche 11 der Längskerbe 5 eine zusätzliche Verkeilung des Befestigungselementes im Bohrloch 17 bewirkt. Eine solche Verspannung ist immer dann zweckmäßig, wenn das Befestigungselement 1 einen Nagelkopf 13 aufweist.

Des weiteren kann im Nagelkopf 13 eine Anbohrsenkung 23 angeordnet sein, die dazu dient, den Nagelkopf 13 aufzubohren. Damit ist es möglich, den Befestigungsgegenstand 19 vom Bauteil 18 abzunehmen.

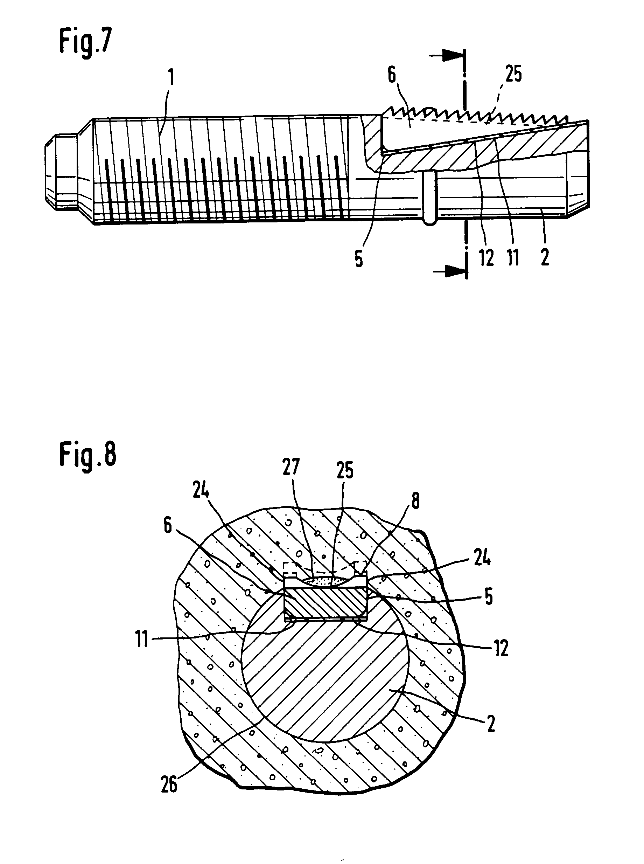

Figur 7 und 8 zeigen ein Befestigungselement 1, bei dem der Keil 6 an seiner Außenfläche eine längslaufende, beidseitig von Außenrändern 24 begrenzte Mulde 25 aufweist. Die Tiefe der Mulde 25 ist so gewählt, daß der Muldengrund innerhalb des Durchmessers des Schaftes 2 liegt und nur die mit Zähnen 8 versehenen Außenränder 24 den Schaft 2 überragen. Dadurch entsteht beim Eintreiben des Befestigungselementes 1 in ein Bohrloch 26 (siehe Figur 8) zwischen dem Muldengrund und der Bohrlochwandung ein Spalt 27, der zur Aufnahme des beim Eintreiben abgeschabten Materials dient. In gestrichelter Form ist die Position des Keils 6 nach einer axialen Verschiebung zwischen dem Keil 6 und dem Schaft 2 dargestellt. Durch die zum vorderen Ende des Befestigungselementes ansteigende Grundfläche 11 der Längskerbe 5 wird der Keil 6 bei der axialen Verschiebung nach außen gedrückt, so daß sich die Außenränder 24 stärker in das Material eingraben. Dadurch wird auch der Spalt 27 verkleinert bzw. vollständig eliminiert, so daß die gesamte Muldenfläche in der Bohrlochwandung eingedrückt ist. Zur leichteren axialen Verschiebung sitzt der Keil 6 auf einer die Gleitschicht 12 bildenden Tefloneinlage auf.

## Patentansprüche

1. Nagelartiges Befestigungselement (1) mit am hinteren Ende (4) angeordnetem Haltemittel zur Verspannung eines Gegenstandes (19) an einem Bauteil (18), und wenigstens einem vom vorderen Stirnende (10) ausgehenden und in Längsrichtung über einen Teil der Länge des Schaftes (2) des Befestigungselementes (1) verlaufenden Spreizbereich, der durch einen Freiraum mit einem im Freiraum eingesetzten Spreizelement gebildet ist, **dadurch gekennzeichnet**, daß der Freiraum als U-förmige Längskerbe (5) ausgebildet ist, deren Grundfläche (11) zum vorderen Stirnende (10) ansteigt, und daß das Spreizelement als Keil (6) ausgebildet ist, der in der Längskerbe (5) auf der Grundfläche (11) in Richtung zum vorderen Stirnende (10) verschiebbar aufliegt und dessen Außenfläche mit Zähnen (8) versehen ist, die den Schaft (2) überragen.

2. Befestigungselement nach Anspruch 1, **dadurch gekennzeichnet**, daß die Außenfläche des Keils (6) vom vorderen Stirnende (10) ausgehend zum hinteren Ende (4) leicht ansteigend verläuft.

3. Befestigungselement nach Anspruch 1, **dadurch gekennzeichnet**, daß der Keil (6) an der zum hinteren Ende (4) des Befestigungselementes weisenden Begrenzung der Längskerbe (5) an einem Anschlag (16) anliegt.

4. Befestigungselement nach Anspruch 1, **dadurch gekennzeichnet**, daß an dem Keil (6) ein Halteelement (7) angreift, welches den Keil (6) lösbar in der Längskerbe (5) festhält.

5. Befestigungselement nach Anspruch 1, **dadurch gekennzeichnet**, daß die Zähne (8) unterschiedliche Zahnflanken aufweisen, wobei die kürzere Zahnflanke in Richtung zum vorderen Stirnende angeordnet ist.

6. Befestigungselement nach Anspruch 1, **dadurch gekennzeichnet**, daß der Keil (6) in der Längskerbe (5) auf einer Gleitschicht (12) aufsitzt.

7. Befestigungselement nach Anspruch 1, **dadurch gekennzeichnet**, daß zwischen der Grundfläche (11) der Längskerbe (5) und dem Keil (6) eine den Keil radial nach außen drückende Blattfeder (15) eingelegt ist.

8. Befestigungselement nach Anspruch 1, **dadurch gekennzeichnet**, daß am vorderen Stirnende des Befestigungselementes (1) eine Nagelspitze (14) angeordnet ist.

9. Befestigungselement nach Anspruch 1, **dadurch gekennzeichnet**, daß das am hinteren Ende des Befestigungselementes (1) angeordnete Haltemittel ein Nagelkopf (13) ist, unter dem ein Verspannelement (20, 21) angeordnet ist.

10. Befestigungselement nach Anspruch 9, **dadurch gekennzeichnet**, daß das Verspannelement eine Tellerfeder (20) ist.

11. Befestigungselement nach Anspruch 9, **dadurch gekennzeichnet**, daß das Verspannelement eine keilförmige Unterlagscheibe (21) ist, wobei die Unterseite des Nagelkopfes (13) eine gegenläufige Keilfläche (22) aufweist.

12. Befestigungselement nach Anspruch 1, **dadurch gekennzeichne**t, daß die Außenfläche des Keils (6) mit einer längslaufenden, beidseitig von Außenrändern (24) begrenzten Mulde (25) versehen ist.

13. Befestigungselement nach Anspruch 12, **dadurch gekennzeichnet**, daß der Muldengrund innerhalb des Durchmessers des Schaftes (2) liegt und nur die mit Zähnen (8) versehenen Außenränder (24) den Schaft (2) überragen.

14. Befestigungselement nach Anspruch 1, d**adurch gekennzeichnet**, daß die beiden Stirnseiten des Keils (6) abgerundet sind.

## Claims

1. A nail-like fixing element having retaining means arranged at its rear end for clamping an article to a component, and at least one expansion zone extending from the leading end face and in the longitudinal direction for part of the length of the shank of the fixing element, which expansion zone is formed by a free space with an expansion element inserted in the free space, characterized in that the free space is in the form of a U-shaped longitudinal slot (5), the base (11) of which slopes up towards the leading end face (10), and the expansion element is in the form of a wedge (6) which is positioned in the longitudinal slot (5) on the base (11) so as to be displaceable towards the leading end face (10), the outer face of which wedge is provided with teeth (8) which project beyond the shank (2).

2. A fixing element according to claim 1, characterized in that the outer face of the wedge (6) is angled from the leading end face (10) slightly to enlarge towards the rear end (4).

3. A fixing element according to claim 1, characterized in that the wedge (6) bears against a stop member (16) at the limit of the longitudinal slot (5) nearest the rear end (4) of the fixing element.

4. A fixing element according to claim 1, characterized in that a retaining element (7) which holds the wedge (6) movably in the longitudinal slot (5) acts on the wedge (6).

5. A fixing element according to claim 1, characterized in that the teeth (8) have disparate tooth flanks, the shorter tooth flank being arranged facing towards the leading end face.

6. A fixing element according to claim 1, characterized in that the wedge (6) lies on a sliding-contact layer (12) in the longitudinal slot (5).

7. A fixing element according to claim 1, characterized in that a leaf spring (15) which presses the wedge radially outwards is inserted between the base (11) of the longitudinal slot (5) and the wedge (6).

8. A fixing element according to claim 1, characterized in that a nail tip (14) is arranged at the leading end face of the fixing element (1).

9. A fixing element according to claim 1, characterized in that the retaining means arranged at the rear end of the fixing element (1) is a nail head (13), beneath which a clamping element (20, 21) is arranged.

10. A fixing element according to claim 9, characterized in that the clamping element is a cup spring (20).

11. A fixing element according to claim 9, characterized in that the clamping element is a wedge-shaped washer (21), the underside of the nail head (13) having a wedge face (22) extending in the opposite direction.

12. A fixing element according to claim 1, characterized in that the outer face of the wedge (6) is provided with a longitudinal recess (25) bounded on each side by an outer edge (24).

13. A fixing element according to claim 12, characterized in that the bottom of the recess lies within the diameter of the shank (2) and only the outer edges (24) provided with teeth (8) project beyond the shank (2).

14. A fixing element according to claim 1, characterized in that the two end faces of the wedge (6) are rounded.

## Revendications

1. Elément de fixation (1) du genre d'un clou comportant un moyen de retenue, disposé à l'extrémité arrière (4) en vue de serrer un objet (19) sur un élément de maçonnerie (18), et au moins une zone d'expansion partant de l'extrémité frontale avant (10) et s'étendant dans le sens longitudinal sur une partie de la longueur du fût (2) de l'élément de fixation (1), zone qui est formée par un espace libre comportant un élément d'expansion qui y est inséré, **caractérisé en ce que** l'espace libre a la forme d'une entaille longitudinale (5) en forme de U dont la surface de base (11) est ascendante en direction de l'extrémité frontale avant (10), et en ce que l'élément d'expansion a la forme d'un coin (6), qui peut être déplacé dans l'entaille longitudinale (5) sur la surface de base (11) en direction de l'extrémité frontale avant (10), et dont la surface extérieure est munie de dents (8) qui dépassent du fût (2).

2. Elément de fixation selon la revendication 1, **caractérisé en ce que** la surface extérieure du coin (6) s'étend de façon légèrement ascendante à partir de l'extrémité frontale avant (10) jusqu'à l'extrémité arrière (4).

3. Elément de fixation selon la revendication 1, **caractérisé en ce que** le coin (6) s'appuie sur une butée (16) à la limite de l'entaille longitudinale (5) orientée vers l'extrémité arrière (4) de l'élément de fixation.

4. Elément de fixation selon la revendication 1, **caractérisé en ce que** le coin (6 ) est attaqué par un élément de retenue (7), qui maintient fermement et de façon libérable le coin (6) dans l'entaille longitudinale (5).

5. Elément de fixation selon la revendication 1, **caractérisé en ce que** les dents (8) présentent des flancs de dent différents, le flanc de dent le plus court étant disposé en direction de l'extrémité frontale avant.

6. Elément de fixation selon la revendication 1, **caractérisé en ce que** le coin (6) repose sur une couche de glissement (12) dans l'entaille longitudinale (5).

7. Elément de fixation selon la revendication 1, **caractérisé en ce qu'**un ressort à lame (15), qui pousse le coin radialement vers l'extérieur, est placé entre la surface de base (11) de l'entaille longitudinale (5) et le coin (6).

8. Elément de fixation selon la revendication 1, **caractérisé en ce qu'**une pointe de clou (14) est disposée à l'extrémité avant de l'élément de fixation (1).

9. Elément de fixation selon la revendication 1, **caractérisé en ce que** le moyen de retenue disposé à l'extrémité arrière de l'élément de fixation (1) est une tête (13) de clou sous laquelle est disposé un élément de serrage (20, 21).

10. Elément de fixation selon la revendication 9, **caractérisé en ce que** l'élément de serrage est une rondelle-ressort (20).

11. Elément de fixation selon la revendication 9, **caractérisé en ce que** l'élément de serrage est une rondelle d'appui (21) en forme de coin, la face inférieure de la tête (13) de clou présentant une surface de coin (22) à pente inversée.

12. Elément de fixation selon la revendication 1, **caractérisé en ce que** la surface extérieure du coin (6) est munie d'une cuvette (25) longitudinale limitée des deux côtés par des bords extérieurs (24).

13. Elément de fixation selon la revendication 12, **caractérisé en ce que** le fond de la cuvette se situe à l'intérieur du diamètre du fût (2) et que seuls les bords extérieurs (24), munis de dents, dépassent du fût (2).

14. Elément de fixation selon la revendication 1, **caractérisé en ce que** les deux côtés frontaux du coin (6) sont arrondis.
